Europäisches Patentamt

European Patent Office

Office européen des brevets

(19)

(11) Veröffentlichungsnummer : **0 041 136 B1**

(12) **EUROPÄISCHE PATENTSCHRIFT**

(45) Veröffentlichungstag der Patentschrift :
28.11.84

(21) Anmeldenummer : 81103389.3

(22) Anmeldetag : 05.05.81

(51) Int. Cl.³ : **B 25 J 17/00**

(54) Schwenkantrieb für schwenkbar gelagerte Maschinenteile, insbesondere bei Manipulatoren.

(30) Priorität : 29.05.80 DE 3020378
14.04.81 DE 3115061

(43) Veröffentlichungstag der Anmeldung :
09.12.81 Patentblatt 81/49

(45) Bekanntmachung des Hinweises auf die Patenterteilung : 28.11.84 Patentblatt 84/48

(84) Benannte Vertragsstaaten :
AT CH FR GB IT LI SE

(56) Entgegenhaltungen :
AT-B- 226 849

(73) Patentinhaber : KUKA Schweissanlagen & Roboter
GmbH
Blücherstrasse 144
D-8900 Augsburg (DE)

(72) Erfinder : Zimmer, Ernst
Michael Steinherr Strasse 34
D-8904 Friedberg (DE)

(74) Vertreter : Ernicke, Hans-Dieter, Dipl.-Ing.
Schwibbogenplatz 2b
D-8900 Augsburg (DE)

## Beschreibung

Die Erfindung betrifft einen Schwenkantrieb für schwenkbar gelagerte Bauteile von Maschinen, Apparaten, Manipulatoren und dgl. mit den im Oberbegriff des Hauptanspruches aufgeführten Merkmalen.

Diese sind aus der GB-PS 1 212 581 bekannt, mit der ein spielfreier Schwenkantrieb für Steuerruder von Flugzeugen beschrieben wird. Danach ist es bekannt, auf einer torsionselastischen Antriebswelle zwei voneinander distanzierte Antriebsritzel gegeneinander verspannt anzuordnen. Diese treiben über doppelstufige Planetenradgetriebe mit sehr hoher Untersetzung das Steuerruder in der Weise an, daß je eine innenverzahnte, mit dem Steuerruder starr verbundene Hülse als äußeres Sonnenrad der zweiten Getriebestufe wirkt. Folglich muß der Planetenradträger ortsfest abgestützt werden, was mit einem durch die Hülle radial greifenden Hebelarm erfolgt. Dadurch steht dem Steuerruder nur ein begrenzter Schwenkbereich zur Verfügung, der für den Schwenkarm eines Manipulators oder für andere schwenkbar gelagerte Bauteile meistens viel zu klein ist.

Die Verspannung des bekannten Schwenkgetriebes erfolgt antriebsseitig, indem die Antriebswelle um einen oder mehrere Zähne eines der beiden Antriebsritzel tordiert wird und dieses Ritzel in dieser Drehstellung mit den Planetenrädern der zugehörigen ersten Getriebestufe in Eingriff gebracht wird. Die Torsionsverspannung wirkt sich über die Planetenradgetriebe mit entsprechender Verminderung bis zur Abstützung am Steuerungselement aus und soll dazu beitragen, die Sicherheit des Flugzeuges durch Vermeidung von aerodynamisch bedingtem Flattern des Steuerruders zu verbessern.

Diese bekannte Art des antriebsseitigen Verspannens von Getriebezügen setzt eine komplizierte Montage und eine besonders lang dimensionierte torsionselastische Antriebswelle voraus, weshalb deren Anwendung auf Schwenkantriebe für Manipulatoren und andere schwenkbar gelagerte Bauteile von Maschinen, Apparaten und dgl. unrealistisch ist, weil es dort meistens auf platzsparende Konstruktionen ankommt. Eine feinfühlige und stufenlose Einstellung der Torsionsspannung ist nicht möglich, da nur zahnweise verstellt werden kann.

Mit der Erfindung wird aber angestrebt, die Spielfreiheit eines Schwenkantriebes zur Bewältigung anderer Probleme zu erreichen. Schwenkarme von Manipulatoren und andere schwenkbar gelagerte Bauteile von Maschinen, Apparaten und dgl. müssen häufig oszillierend verschwenkt werden und dabei nicht unerhebliche Lasten tragen. Wird von dieser Bewegung große Präzision verlangt, dann ist ein im Untersetzungsgetriebe vorhandenes Spiel in mehrfacher Hinsicht außerordentlich nachteilig. Einerseits wird die geforderte Präzision nicht erreicht, andererseits entstehen wegen des Spiels beim Durchgang von Totpunktlagen labile Zwischenstellungen der miteinander geführten Teile, die zum Auftreten von schwingungsanregenden Impulsen führen.

Man hat deshalb versucht, das Getriebespiel durch Einsatz besonderer, besonders präzis hergestellter Getriebe zu verringern, was zu unwirtschaftlichen Verteuerungen führte. Überdies muß meistens Verringerung des Getriebespiels mit Erhöhung von Reibung in Kauf genommen werden.

In der Druckschrift « Information 12, Stirnradgetriebe » der Firma Renk wird zum genauen Antrieb eines Radioteleskopes vorgeschlagen, Getriebepaare gegeneinander zu verspannen, um das bei hochpräzis hergestellten Stirnrädern noch vorhandene Restzahnspiel zu kompensieren. Dabei wird aber nur ein Teil des gesamten Getriebespieles kompensiert, was auch beim Gegenstand der AT-PS 189 496 der Fall ist, die die Aufhebung des Getriebespiels bei Rotationsantrieben über torsionselastische Verformungen von Wellen im Übersetzungsoder Abtriebsbereich lehrt. In der Druckschrift « Metall, Heft 12/1969, S. 1291 » ist offenbart, das von einem Ritzel angetriebene Gegenrad in zwei Zahnscheiben aufzulösen und deren Naben über eine torsionselastische Welle zu verspannen, wozu eine Flanschverbindung gewählt worden ist, die wiederum komplizierte Montagevorgänge bedingt. Damit kann aber nur ein in Aufbau und Lastverteilung unsymmetrisches Getriebe gebildet werden, das, wie der vorgenannte Stand der Technik für einen Schwenkantrieb für Manipulatoren und andere schwenkbar gelagerte Bauteile ungeeignet ist.

Der Erfindung liegt daher die Aufgabe zugrunde, einen spielfreien Schwenkantrieb nach dem Oberbegriff so zu gestalten, daß mit ihm bei größmöglichem Schwenkbereich eine größere Bewegungsgenauigkeit des zu bewegenden Bauteils trotz Überschreitens von Totpunktstellungen und unabhängig von der Größe der zu bewegenden Masse unter Meidung komplizierter, teuer und spielarmer Getriebe erzielt werden kann.

Diese Aufgabe wird erfindungsgemäß mit den kennzeichnenden Merkmalen des Hauptanspruchs gelöst.

Erfindungsgemäß wird das in der einzelnen Untersetzung vorhandene Zahnspiel von der Abtriebsseite her beseitigt, wobei die Antriebswelle feinfühlig, stufenlos und auf ein bestimmtes Vielfaches des Motornennmomentes einstellbar tordiert wird. Wenn nun die Abtriebsräder, deren gegensinnige Verdrehung die Verspannung auslöst, in der Stellung gegenüber dem zu bewegenden Bauteil fixiert werden, in welcher die gewünschte Spielfreiheit auf Kosten der Torsion der Antriebswelle erreicht worden ist, dann wird die geforderte Bewegungspräzision ohne erheblichen konstruktiven Aufwand ohne weiteres erreicht, auch wenn erhebliche Lasten zu bewegen oder Kräfte zu überwinden sind.

Der erfindungsgemäße spielfreie Schwenkantrieb wird nach den ersten Ausführungsbeispielen durch einen extern an der Antriebswelle angreifenden Motor angetrieben. Das hat zur Folge, daß beim Totpunktdurchgang des verschwenkten Bauteiles in der einen Drehrichtung eine Verstärkung der Torsionsverspannung in der Antriebswelle entsteht, während in der anderen Drehrichtung die Torsionsverspannung vermindert wird. In manchen Fällen werden bei reversierbaren Schwenkantrieben für drehbar gelagerte Maschinenteile, insbesondere für Schwenkarme von Manipulatoren, gleiche Verhältnisse, insbesondere gleiche Ansteuerungsgenauigkeiten, angestrebt, die unabhängig vom Drehrichtungswechsel und vom Durchgang von Totpunktlagen sein müssen. Zur Lösung dieses Problems wird mit der Erfindung vorgeschlagen, den Antrieb direkt oder über ein Vorgelege auf die geometrische Mitte der torsionselastischen Antriebswelle zwischen den beiden Getriebezügen einwirken zu lassen. Dadurch wird eine Verformungssymmetrie bei der Antriebswelle in jedem Antriebs- und Belastungszustand erreicht, die beim Wechsel der Drehrichtung des anzutreibenden Maschinenteiles gleiche Torsionsspannungen aufrecht zu erhalten gestattet. Der Antrieb greift damit in einem verformungsneutralen Bereich der torsionselastischen Antriebswelle an, wo das eingebrachte Moment sich bei Drehrichtungswechsel nicht unsymmetrisch verstärkend oder abschwächend auf die zur Beseitigung des Zahnspiels herbeigeführte Torsionsverspannung auswirken kann. Der Begriff der geometrischen Mitte bezieht sich auf einen Bereich der Antriebswelle, der Verformungssymmetrie bei Einleitung des Antriebsdrehmomentes gewährleistet. Dieser Bereich muß nicht unbedingt in der Mitte zwischen den beiden Antriebsritzeln liegen, sondern kann entsprechend den Ansprüchen 5 bis 7 auch anders bestimmt werden.

Die Ansprüche 2 und 3 geben vorteilhafte Ausgestaltungen des spielfreien Schwenkantriebes wieder, die eine stufenlose Verformung der Antriebswelle gestatten und eine einfache Nachstellbarkeit ermöglichen, weil die Spannmittel ständig zwischen den Abtriebsrädern und dem zu verschwenkenden Maschinenteil verbleiben.

Weitere Einzelheiten der Erfindung ergeben sich aus den Unteransprüchen und der Beschreibung. In der Zeichnung ist die Erfindung anhand eines Ausführungsbeispieles schematisch dargestellt (ohne darauf beschränkt zu sein). Es zeigen :

Figur 1 eine Seitenansicht eines Manipulators,

Figur 2 einen Schnitt durch eine Gelenkstelle des Manipulators in der Sicht entsprechend dem Pfeil A in Fig. 1,

Figur 3 einen Querschnitt entlang der Linie III-III gemäß Figur 2,

Figur 4 einen Vertikalschnitt durch das Grundgestell eines Manipulators mit einer Ausführungsvariante des Schwenkantriebes,

Figur 5 eine Antriebsvariante gemäß Figur 2,

Figur 6 einen Schnitt durch eine torsionselastische Antriebswelle in einer Variante zu Figur 4, und

Figur 7 einen Schnitt durch eine torsionselastische Antriebswelle in einer Variante zu Figur 2.

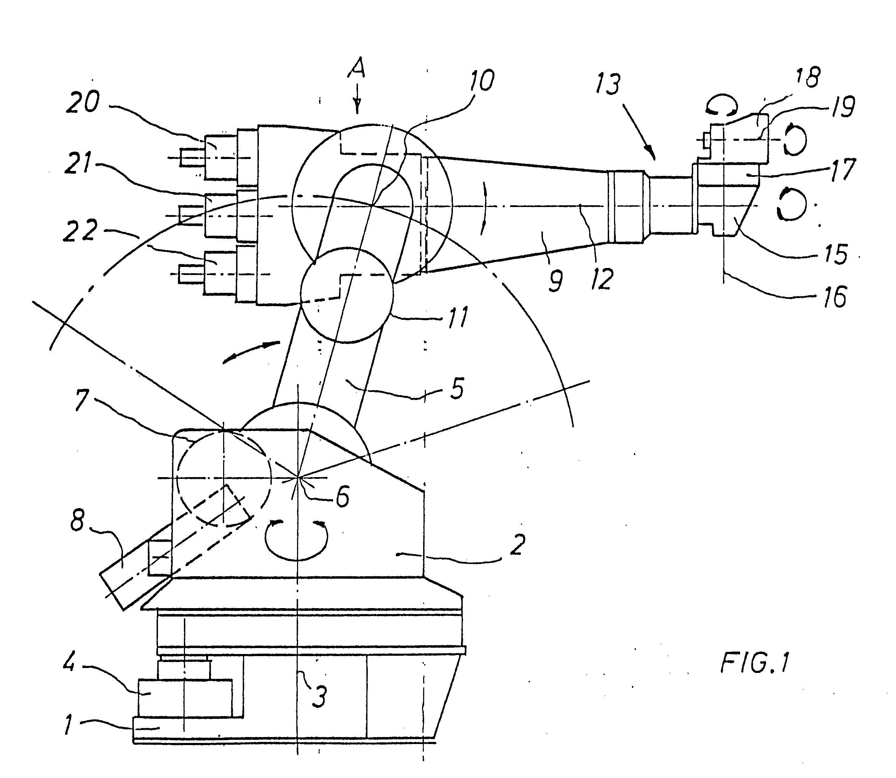

Im Ausführungsbeispiel der Figur 1 ist ein Manipulator dargestellt, um an dieser Figur die Anzahl und die Lage der Achsen der einzelnen zu bewegenden Teile zu verdeutlichen, bei denen der Gegenstand der Erfindung vorteilhafterweise angewandt werden kann.

An einem bodenfesten Grundgestell 1 ist ein sog. Karussell 2 um eine vertikale Drehachse 3 schwenkbar gelagert. Das Karussell 2 wird über einen Antriebsmotor 4 um die Schwenkachse 3 verdreht, wobei die Drehrichtung gewechselt werden kann. An diesem Karussell 2 ist in der Schwenkachse 6 ein Antriebsarm 5 oszillierend schwenkbar gelagert, dessen Schwenkbewegung von dem Motor 7 erzeugt wird. Diese Schwenkachse 6 liegt horizontal. Das Gewicht des Antriebsarmes 5 und der daran angeordneten Teile wird durch einen schematisch angedeuteten Gewichtsausgleich 8 austariert.

Am freien Ende des Antriebsarmes 5 ist ein Ausleger 9 um die Schwenkachse 10 gelagert. Die Schwenkbewegung des Auslegers 9 wird von dem Antriebsmotor 11 erzeugt. Dieser Schwenkarm 9 lagert seitlich erheblich aus und trägt an seinem freien Ende eine sog. mechanische Hand 13, die mit Werkzeugen beliebiger Art ausgestattet sein kann. Es ist z. B. vorgesehen, daß diese mechanische Hand 13 um die Auslegerachse 12 hin- und herdrehbar geführt ist. Die mechanische Hand 13 weist beim Ausführungsbeispiel der Figur 1 ein Eckteil 15, einen daran angeschlossenen Tragarm 17 und ein Schlußteil 18 auf, so daß Drehbewegungen um die Auslegerachse 12, die Schwenkachse 16 und die Schwenkachse 19 durchgeführt werden können.

Am Beispiel der Schwenkachse 10 läßt sich am besten verdeutlichen, daß ein dort vorhandenes Getriebespiel für die Bewegung des Auslegers 9 zu einer wesentlichen Übersetzung im Bereich der mechanischen Hand 13 führt, worauf die mechanische Ungenauigkeit der bekannten Manipulatoren beruht.

Wenn es gelänge, dieses Getriebespiel aufzuheben, dann wäre die Ansteuergenauigkeit der mechanischen Hand 13 besser erreichbar. Dieses Problem ergibt sich aber nicht nur beim Ausleger 9, sondern auch bei zahlreichen anderen Schwenkachsen. Darüber hinaus ist dieses Problem nicht auf Manipulatoren beschränkt. Bekannt sind z. B. Zahnstangen-Ritzel-Antriebe, bei denen die Zahnstange mittels eines Hydraulik-Zylinders in die Zähne des Ritzels gepreßt wird. Die Größe der Untersetzung ist dabei natürlich beschränkt. In den folgenden Figuren wird anhand eines Ausführungsbeispieles gezeigt, wie man das Getriebespiel eliminieren kann, um dadurch eine genauere Ansteuerungsfähigkeit des zu bewegenden Teiles zu erreichen.

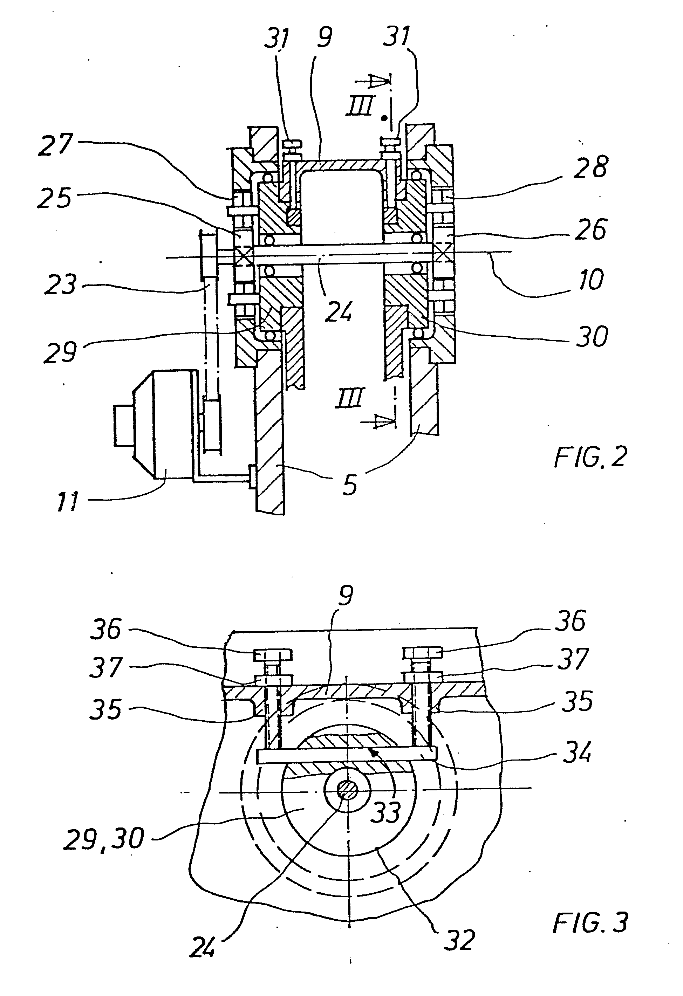

Das Beispiel der Figur 2 zeigt einen Schnitt durch die Schwenkachse 10, in der der Ausleger 9 gelagert ist. Von dem Antriebsmotor 11 wird über ein spielfreies Vorgelege 23, beispielsweise Zahnriemenantrieb, die Antriebswelle angetrieben, welche aus torsionselastischem Material besteht. An beiden Enden der Antriebswelle 24 befinden sich Antriebsritzel 25, 26, welche das Drehmoment des Antriebswelle 24 verzweigend über Untersetzungsgetriebe 27, 28 (schematisch angedeutet) auf Abtriebsräder 29, 30 übertragen, welche mit dem Ausleger 9 fest verbunden sind. Die Untersetzungsgetriebe 27, 28 können beliebiger Art sein, beispielsweise Planetenradgetriebe, Cyclo-Getriebe (WZ = Wälzgetriebe). Wären die Abtriebsräder 29, 30 unbeweglich starr mit dem Ausleger 9 verbunden, dann würde das Getriebespiel voll zur Wirkung kommen. Beim Ausführungsbeispiel ist aber vorgesehen, daß mindestens eines der Abtriebsräder 29, 30 gegenüber dem Ausleger 9 drehelastisch verspannbar ist. Zu diesem Zweck empfiehlt es sich, das entsprechende Abtriebsrad 29, 30 drehbar im Ausleger 9 anzuordnen und eine Drehsperre in der Weise vorzusehen, daß damit das im Getriebe vorhandene Spiel aufgehoben werden kann. Beim Beispiel der Figur 2 sind schematisch angedeutete Spannmittel 31 dargestellt, welche diese Verspannung herbeizuführen imstande sind. Diese Spannmittel 31 können unterschiedlicher Natur sein.

Eine Ausführungsvariante solcher Spannmittel ergibt sich aus Figur 3. Danach ist eine Nabe 32 des einzelnen Abtriebsrades 29, 30 mit einer Quernut 33 stirnseitig versehen, in die ein Riegel 34 eingreift, dessen Enden über die Nabe 32 hinausstehen. Gegen diese überstehenden Enden des Riegels 34 werden Spannschrauben 36 angestellt, die sich über Gewindehülsen 35 am Ausleger 9 abstützen und durch Kontermuttern 37 in ihrer Einstellung gesichert werden können. Durch entsprechendes Verschrauben der Spannschrauben 36 ist es möglich, die Nabe 32 des einzelnen Abtriebsrades 29, 30 um ihre Achse zu verdrehen, bis das im Getriebezug gemäß Figur 2 vorhandene Spiel aufgehoben ist. Diese Verdrehung der Nabe 32 führt dazu, daß die Antriebswelle 24 gemäß Figur 2 torsionselastisch beansprucht wird. Die beiden auf ihr angeordneten Antriebsritzel 25, 26 kommen damit an den zugeordneten Elementen der Untersetzungsgetriebe 27, 28 zur gleichmäßigen Anlage, so daß der Ausleger 9 um die Achse spielfrei verschwenkbar ist.

Es liegt natürlich auf der Hand, daß die Spannmittel unterschiedlich beschaffen sein können, welhalb sich die Erfindung nicht auf die Ausführungsbeispiele beschränkt.

Diese Lager- und Getriebetechnik läßt sich bei jeder Achse des erfindungsgemäßen Manipulators einsetzen, auch bei den kleineren Achsen der mechanischen Hand 13, deren Teile von den Antriebsmotoren 20, 21, 22 gemäß Figur 1 angetrieben werden.

Hinsichtlich der Lagertechnik ist von Bedeutung, daß die Abtriebsräder 29, 30 eine sehr billige, doppelte Lagerfunktion übernehmen, denn sie sind einerseits in Bohrungen des Auslegers 9 wegen ihrer Verspannung geführt und andererseits im Antriebsarm 5 über geeignete Lagermittel gelagert. Folglich braucht der Ausleger 9 nicht unmittelbar an dem ihn eigentlich tragenden Antriebsarm 5 durch aufwendige Lagerungen unmittelbar geführt zu werden.

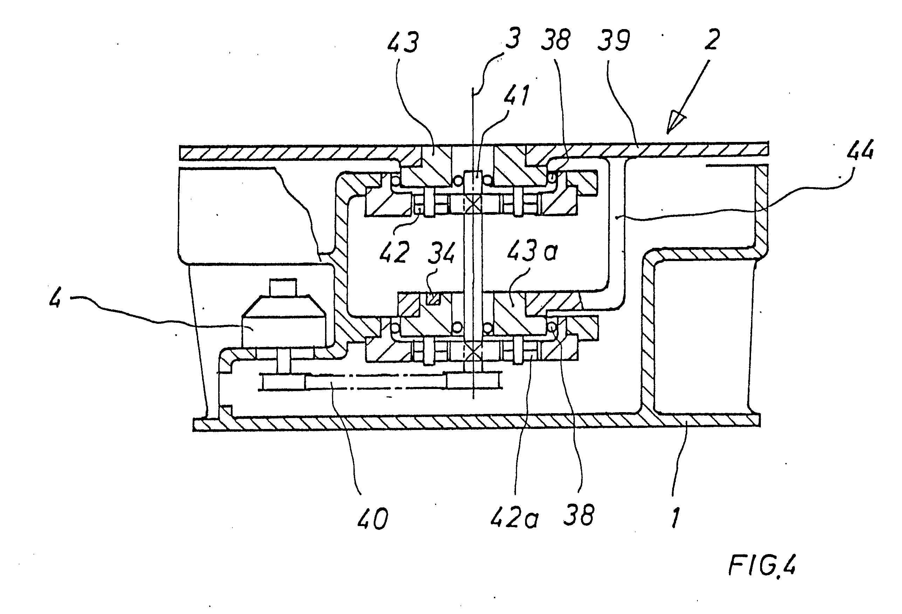

Es liegt auf der Hand, daß die Konstruktion gemäß Figuren 2 und 3, bezogen auf die Schwenkachse 10 gemäß Figur 1, nicht ohne weiteres angewandt werden kann bezüglich der Lagerung der Schwenkachse 3 gemäß Figur 1. Zu diesem Zweck ist in Figur 4 eine Ausführungsvariante dargestellt, welche dem unteren Teil der Figur 1 ungefähr entspricht. Danach ist in einem Grundgestell 1 die vertikale Achse 3 eines Karussels 2 hin- und herschwenkbar geführt. Das Karussell 2 wird von dem Antriebsmotor 4 über das spielfreie Vorgelege 40 angetrieben, das wiederum als Zahnriemenantrieb gestaltet sein kann.

Das im Grundgestell 1 gelagerte Teil ist beispielsweise ein Flansch 39, der in den Lagern 38 drehbeweglich geführt ist. Mit diesem Flansch 39 wird das Karussell oder ein sonstiges Maschinenteil fest verbunden. Der Flansch 39 ist im Beispiel der Figur 4 gabelartig ausgebildet, wodurch ein Bügelsteg 44 entsteht, über den die Abtriebsräder 43, 43a gegeneinander verspannt werden. Seitlich vom dem Bügelsteg 44 und Flansch 39 befinden sich die Untersetzungsgetriebe 42, 42a mit den zugeordneten Abtriebsrädern 43, 43a. Die torsionsverursachenden Spannmittel sind ebenfalls durch den Riegel 34 angedeutet. Wesentlich ist, daß man den einen Getriebezug gegenüber dem anderen Getriebezug torsionselastisch verspannen und die Verspannung am Flansch 39 abstützen kann, so daß zwischen dem Antrieb 4, 40, 41 einerseits und dem Abtrieb 43, 39 andererseits Spielfreiheit gewährleistet ist.

Aufgrund dieser Variante ergibt sich eine mannigfache konstruktive Ausgestaltung mit dem Zweck, die Spielfreiheit irgend eines Untersetzungsgetriebes gegenüber dem anzutreibenden Teil zu gewährleisten und damit eine besonders große Bewegungsnauigkeit insbesondere bei labiler oder indifferenter Lage des anzutreibenden Teiles herbeizuführen.

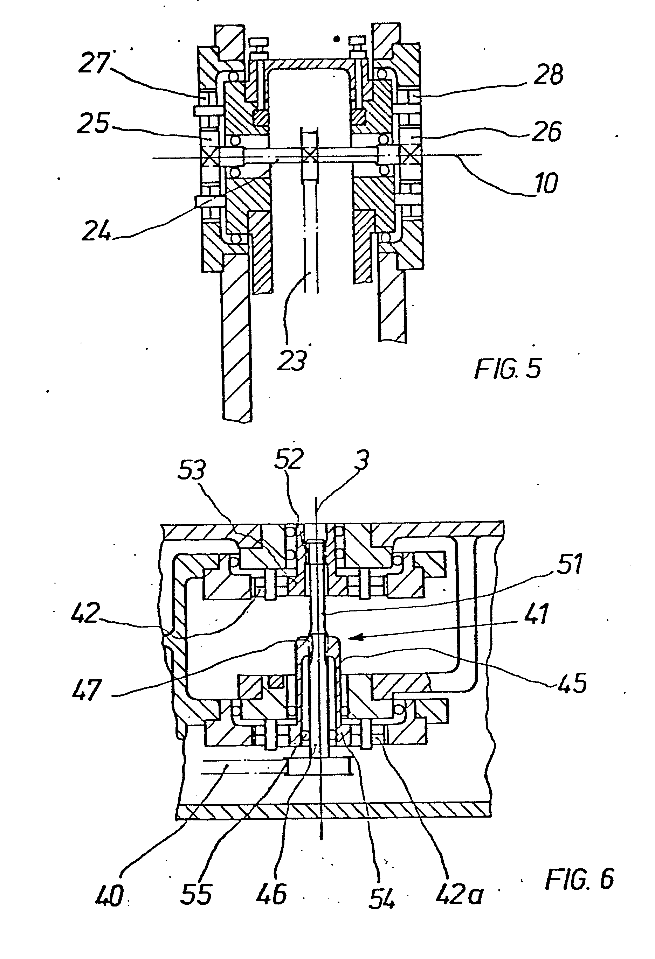

Im Beispiel der Figur 5 wird als Variante zu Figur 2 dargestellt, daß ein besonderer Vorteil dann erreicht wird, wenn das Vorgelege 23 auf die geometrische Mitte der torsionselastischen Antriebswelle 24 zwischen den Getriebezügen 25, 27 bzw. 26, 28 einwirkt, wodurch die Torsionsfähigkeit der Antriebswelle 24 nicht oder nur unwesentlich beeinträchtigt wird, weil das Vorgelege 23 den neutralen Zonenbereich der Antriebswelle 24 antreibt. Die federnden Längen der Antriebswelle 24 werden dadurch jedoch gleichgroß gehalten. Unter geometrischer Mitte wird derjenige neutrale Wellenbereich verstanden, in dem die eine Vorspanntorsion in die entgegengesetzt gerichtete andere Vorspanntorsion übergeht. In Abhängigkeit von unterschiedlichen Dimensionierungen braucht die erfindungsgemäß definierte geometrische Mitte nicht mit der zeichnerischen Mitte zwischen den beiden Getriebezügen überneinzustimmen.

Das Antriebsmoment überlagert sich in der einen Drehrichtung dem Vorspannmoment der einen Hälfte der Antriebswelle 24. Die andere Hälfte, die am Übertragen des Drehmomentes nicht beteiligt ist, kann sich hingegen teilweise, unter Beibehaltung einer spielverhindernden Restverspannung entspanne, was zu Reibungsminderungen führt. Bei Umkehr der Drehrichtung kehrt zunächst die vorgespannte Antriebswelle 24 in ihre usprünglich vorgespannte Lage unter Beibehaltung des Spielausgleiches zurück, bevor die Verspannungsüberlagerung in entgegengesetzter Richtung durch die Drehrichtungsumkehr eintritt. Auf diese Weise werden bei beiden Drehrichtungen gleiche Torsionsspannungen bzw. Überlagerungen erreicht. Dadurch können auch keine unterschiedlichen Eigenfrequenzen sowie unterschiedliches Schwingungsverhalten bei Drehrichtungsumkehr entstehen.

Gemäß Figur 6 kann auch dann auf die geometrische Mitte der torsionselastischen Antriebswelle 41 eingewirkt werden, wenn der Antrieb (Vorlegege 40) außerhalb der Getriebezüge 42, 42a liegt. In diesem Fall ist die Antriebswelle 41 mehrteilig ausgebildet. An einer Seite ist sie als Hohlwelle 45 gestaltet, durch welche eine antreibende Welle 46 greift, die im geometrischen Mittelbereich über eine Vielzahnverbindung 47 mit der Hohlwelle 45 verbunden ist. Das weiterführende Wellenteil 51 der antreibenden Welle 46 ist an seinem Ende ebenfalls über eine Vielzahnverbindung 52 mit dem Antriebsritzel 53 des Getriebezuges 42 verbunden. Die Hohlwelle 45 und das Antriebsritzel 54 können eine Einheit bilden. Wesentlich bei dieser Anordnung ist, daß die Torsionselastizität der Hohlwelle 45 und des Wellenteiles 51 ungefähr gleich groß ist, was durch berechenbare Querschnittgestaltung ohne weiteres möglich ist. Das Lager 55 wirkt hauptsächlich stützend auf die antreibende Welle 46 und ermöglicht die torsionselastische Verformung der Hohlwelle 45 relativ zur antreibenden Welle 46.

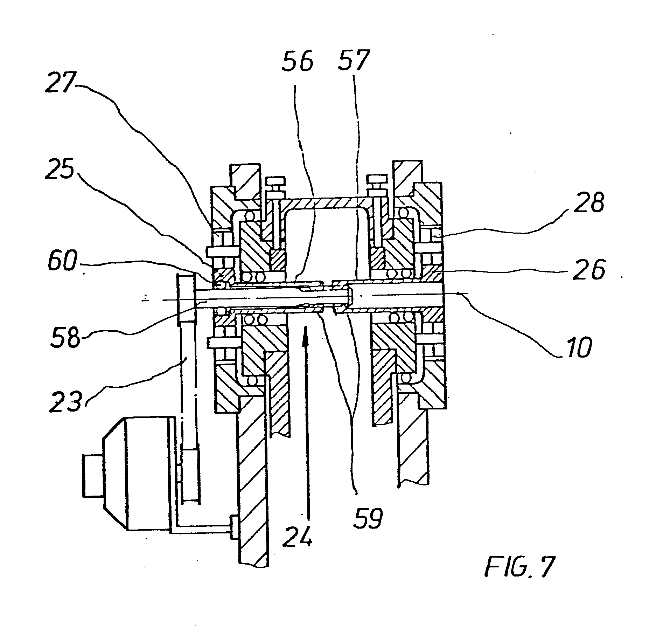

Figur 7 stellt eine weitere Variante zu Figur 2 dar, bei der der Antrieb (Vorgelege 23) ebenfalls außerhalb der Getriebezüge 25, 27 bzw. 26, 28 liegt. Die Antriebswelle 24 ist in zwei etwa gleich lange Hohlwellen 56, 57 geteilt. Einseitig führt eine antreibende Welle 58 zur geometrischen Mitte der Getriebezüge 25, 27 bzw. 26, 28 und verbindet dort über eine Vielzahnverbindung 59 die beiden inneren Enden der Hohlwellen 56, 57. Das Lager 60 hat die gleiche Funktion wie das Lager 55 in Figur 6. Die Antriebsritzel 25, 26 können mit der dazugehörenden Hohlwelle 56, 57 eine Einheit bilden. Wesentlich ist auch hier, daß die Torsionselastizität der Hohlwellen 56, 57 gleich groß ist.

Die konstruktiven Möglichkeiten sind mit den genannten Ausführungsbeispielen selbstverständlich noch nicht erschöpft. Man kann beispielsweise die Varianten untereinander austauschen, indem man für die einzelne Schwenkachse die jeweils konstruktiv günstige Antriebseinheit einsetzt.

**Ansprüche**

1. Spielfreier Schwenkantrieb für schwenkbar gelagerte Bauteile von Maschinen, Apparaten Manipulatoren und dgl., bei dem auf einer torsionselastischen Antriebswelle (24, 41) zwei voneinander distanzierte Antriebsritzel (25, 26) gegeneinander verspannt angeordnet und diesen je ein Untersetzungsgetriebe (27, 28) mit einem koaxial zur Antriebswelle gelagerten und mit dem Bauteil verbundenen Abtriebsrad (29, 30) zugeordnet sind, dadurch gekennzeichnet, daß für den Antrieb schwenkbarer bzw. oszillierend bewegbarer Bauteile die beiden Abtriebsräder (29, 30) zur Aufhebund des gesamten Getriebespiels gegeneinander so weit verspannbar sind, daß in der Antriebswelle (24) die gewünschte torsionselastische Verspannung entstanden ist, und daß die Abtriebsräder (29, 30) in dieser Verspannungsstellung am anzutreibenden Bauteil (9) fixiert bzw. abgestützt sind.

2. Schwenkantrieb nach Anspruch 1, dadurch gekennzeichnet, daß das einzelne Abtriebsrad (29, 30) in dem zu bewegenden Maschinenteil (9) verdrehbar angeordnet und mit sich am Maschinenteil (9) abstützenden Spannmitteln (31) drehschlüssig beaufschlagt ist.

3. Schwenkantrieb nach Anspruch 2, dadurch gekennzeichnet, daß in der Nabe (32) des Abtriebsrades (29, 30) eine quer und in Distanz zu seiner Achse (10) sich erstreckende Nut (33) vorgesehen ist, in die ein beidseitig überstehender Riegel (34) eingreift, gegen dessen Endbereiche zwei Spann-Stellschrauben (36) einwirken (Fig. 3).

4. Schwenkantrieb nach Anspruch 1 oder einem der folgenden, dadurch gekennzeichnet, daß der Antrieb direkt oder über ein Vorgelege (23) auf die geometrische Mitte der torsionselastischen Antriebswelle (24) zwischen den beiden Getriebezügen (25, 27 bzw. 26, 28) einwirkt (Fig. 5).

5. Schwenkantrieb nach Anspruch 4, dadurch gekennzeichnet, daß die Antriebswelle (24, 41) im Bereich der geometrischen Mitte geteilt ausgebildet ist und die Teile in diesem Bereich miteinander drehschlüssig verbunden sind (Fig. 6 und 7).

6. Schwenkantrieb nach Anspruch 5, dadurch gekennzeichnet, daß die Antriebswelle (41) an mindestens einer Seite als Hohlwelle (45) ausgebildet und von einer antreibenden Welle (46) durchsetzt ist, die im Bereich der geometrischen Mitte drehschlüssig mit der Hohlwelle (45) verbunden ist (Fig. 6).

7. Schwenkantrieb nach Anspruch 5 oder 6, dadurch gekennzeichnet, daß beide Teile (45, 51, 56, 57) der Antriebswelle (24, 41) eine die gleiche

Torsionselastizität bedingende Querschnitts-gestaltung aufweisen (Fig. 6 und 7).

## Claims

1. Swivel drive free from play for pivotally mounted structural members of machines, apparatus, manipulators and the like, in which two drive pinions (25, 26) spaced apart from one another on a torsion-elastic drive shaft (24, 41) are arranged fixed relative to one another and a reducing gear (27, 28) with a follower gear (29, 30) mounted coaxially with respect to the drive shaft and connected to the structural member is associated with each of the pinions, characterised in that in order to drive pivotally or oscillatingly movable structural members the two follower gears (29, 30) can be fixed so far apart relative to one another in order to take up all the play in the gearing that the desired torsion-elastic clamping is produced in the drive shaft (24), and that the follower gears (29, 30) are fixed or supported in this clamping position on the structural member (9) being driven.

2. Swivel drive according to claim 1, characterised in that the individual follower gear (29, 30) is rotatably arranged in the structural member (9) to be moved and engages in a rotation-locking manner with supporting clamping means (31) on the structural member (9).

3. Swivel drive according to claim 2, characterised in that in the hub (32) of the follower gear (29, 30) a groove (33) is provided that extends transversely and at a distance from its axis (10), in which groove a bilaterally projecting bar (34) engages, against whose end regions two clamping and adjustment screws (36) act (Fig. 3).

4. Swivel drive according to claim 1 or one of the following claims, characterised in that the drive acts directly or via a gear (23) on the geometrical centre of the torsionelastic drive shaft (24) between the two gear trains (25, 27 and 26, 28) (Fig. 5).

5. Swivel drive according to claim 4, characterised in that the drive shaft (24, 41) is formed divided in the region of the geometrical centre and the parts in this region are connected to one another in a rotationally locked manner (Figs. 6 and 7).

6. Swivel drive according to claim 5, characterised in that the drive shaft (41) is formed as a hollow shaft (45) on at least one side and is penetrated by a driving shaft (46) which is connected in a rotationally locked manner in the region of the geometrical centre with the hollow shaft (45) (Fig. 6).

7. Swivel drive according to claim 5 or 6, characterised in that both parts (45, 51, 56, 57) of the drive shaft (24, 41) have a cross-sectional shape ensuring the same torsional elasticity (Figs. 6 and 7).

## Revendications

1. Entraînement orientable sans jeu pour éléments constitutifs pivotants de machines, d'appareils, de manipulateurs et autres dispositifs semblables, dans lequel deux pignons d'entraînement (25, 26) à distance l'un de l'autre sont disposés de manière à se bloquer mutuellement l'un par rapport à l'autre sur un arbre moteur (24, 41) ayant une élasticité de torsion, et à ces pignons sont adjoints respectivement des démultiplicateurs (27, 28) à roues de sortie (29, 30) montées coaxialement à l'arbre moteur et reliées à l'élément, caractérisé en ce que, pour l'entraînement d'éléments de construction pivotants ou oscillants, les deux roues de sortie (29, 30) peuvent, pour supprimer le jeu de transmission d'ensemble, être bloquées l'une par rapport à l'autre jusqu'à créer dans l'arbre moteur (24) la déformation souhaitée par élasticité de torsion, et en ce que les roues de sortie (29, 30) sont, en cette position de blocage, fixées ou appuyées sur l'élément constitutif (9) à entraîner.

2. Entraînement orientable suivant la revendication 1, caractérisé en ce que la roue de sortie (29, 30) individuelle est montée tournante dans la partie de machines (9) à déplacer et est chargée, par coopération de force en rotation, par des moyens de blocage (31) s'appuyant sur la partie de machine (9).

3. Entraînement orientable suivant la revendication 2, caractérisé en ce que, dans le moyeu (32) de la roue de sortie (29, 30) est prévue une gorge (33) qui s'étend transversalement et à distance de son axe (10), et dans laquelle pénètre un pêne (34) en saillie des deux côtés et sur les régions d'extrémité duquel agissent deux vis de blocage et de réglage (36) (figure 3).

4. Entraînement orientable suivant la revendication 1 ou l'une des suivantes, caractérisé en ce que l'entraînement agit directement ou par une tranmission intermédiaire (23) sur le centre géométrique de l'arbre moteur (24) ayant une élasticité de torsion entre les deux trains d'engrenage (25, 27 et 26, 28) (figure 5).

5. Entraînement orientable suivant la revendication 4, caractérisé en ce que l'arbre moteur (24, 41) est fendu dans la région du centre géométrique, et les parties sont reliées l'une à l'autre dans cette région de manière à être solidaires en rotation (figures 6 et 7).

6. Entraînement orientable suivant la revendication 5, caractérisé en ce que l'arbre moteur (41) est agencé au moins d'un côté en arbre creux (45) et est traversé par un arbre d'entraînement (46) qui est solidaire en rotation de l'arbre creux (45) dans la région du centre géométrique.

7. Entraînement orientable suivant la revendication 5 ou 6, caractérisé en ce que les deux parties (45, 51, 56, 57) de l'arbre moteur (24, 41) présentent une conformation de section transversale donnant la même élasticité de torsion (figures 6 et 7).

FIG.1

0 041 136

FIG. 2

FIG. 3

FIG.4

0 041 136

27
28
25
26
24
10

23

FIG. 5

53
52
3
51
42
41
47
45

40
55
46
54
42a

FIG. 6

4

FIG. 7